# EUROPEAN PATENT APPLICATION

(11) **EP 4 478 213 A1**
(43) Date of publication of application: **18.12.2024**
(21) Application number: 22965475.1
(22) Date of filing: 16.11.2022
(51) Int. Cl.: G06F 16/33

(54) **ARTIFICIAL INTELLIGENCE RECOGNITION SCALE SYSTEM BASED ON AUTONOMOUS INCREMENTAL LEARNING, AND ARTIFICIAL INTELLIGENCE RECOGNITION SCALE RECOGNITION METHOD BASED ON AUTONOMOUS INCREMENTAL LEARNING**

(71) Applicant: Hanshow Technology Co., Ltd., Jiaxing, Zhejiang 314031 (CN)
(72) Inventor: HUANG, Sheng, Jiaxing, Zhejiang 314031 (CN); LIN, Chaowei, Jiaxing, Zhejiang 314031 (CN); CHEN, Yunkai, Jiaxing, Zhejiang 314031 (CN); JIN, Xiaoping, Jiaxing, Zhejiang 314031 (CN)
(74) Representative: Boult Wade Tennant LLP
(86) International application number: PCT/CN2022/132246
(87) International publication number: WO 2024/103289

(57) **Abstract**

The present disclosure discloses a system and an identification method for artificial intelligence identification scale based on autonomous incremental learning. The system includes: a weighing system configured to determine a commodity identifier of a target commodity from at least one candidate commodity identifier, and generate a commodity label based on a weight and the commodity identifier of the target commodity; a weight sensor configured to obtain the weight of the target commodity; a visual sensor configured to obtain an image of the target commodity; and an identification system includes: an identification algorithm module configured to deal the image of the target commodity, acquire a feature vector of the image, calculate a similarity between the feature vector and feature vectors in a feature vector database to obtain at least one feature vector, and determine corresponding a candidate commodity identifier; and an incremental learning algorithm module configured to judge whether incremental learning is needed, and if so, extract a feature vector after performing enhancement processing on the image, combine the extracted feature vector with a trademark identifier and store into the feature vector database. The present disclosure can autonomously perform online incremental learning on different commodities, thereby outputting results with high confidence and achieving strong robustness and adaptability.

## Description

### TECHNICAL FIELD

The present disclosure relates to the technical field of artificial intelligence, and particularly to a system and an identification method for artificial intelligence identification scale based on autonomous incremental learning.

### BACKGROUND

This section is intended to provide the background or the context for the embodiments of the present disclosure set forth in the claims. The description here is not admitted to be the prior art just because it is included in this section.

In the field of offline commodity sales, the main settlement method is to identify commodities by scanning a commodity barcode, and then perform commodity settlement. For non-standard commodities without commodity barcodes, such as fruits and vegetables, customers usually need to carry selected commodities to a specific weighing platform for weigh measurement, manually select a commodity type, and print and attach a corresponding barcode label containing information of the type, the unit price and the total price. This process requires much manpower for operation, which is costly and inefficient, and inevitably increases the queuing time of the consumers.

With the development of the artificial intelligence, especially the application of the deep learning, it is possible to intelligently identify various weighing commodities by means of a computer vision technology and improve the efficiency of weighing and settlement. In recent years, a technology, i.e., an Al visual identification scale, has emerged, which is capable of intelligently identifying and weighing commodities without barcodes, and conveniently settling the commodities based on the results of commodity identifier and weighing.

However, the conventional AI visual identification scale in use faces the problem that there may be some new commodities that have not appeared before, or the commodities may be in different forms, such as being bagged or non-bagged, being in a small package or a large package, etc. In these cases, the AI visual identification scale will output candidate results with low confidence, or output wrong identification results, or even directly fail to identify the commodities. At this time, the administrative staff need to intervene manually, or a special technician or a background server is required to retrain and optimize the AI identification model.

### SUMMARY

Embodiments of the present disclosure provide an artificial intelligence identification scale system based on autonomous incremental learning, which is capable of autonomously performing online incremental learning on different forms of different commodities, new commodities and wrongly identified commodities, thereby outputting results with high confidence and achieving strong robustness and adaptability. The system includes a weighing system, a weight sensor, a visual sensor and an identification system, in which,
the weighing system is configured to receive a weight of a target commodity, and receive and send an image of the target commodity to the identification system; receive at least one candidate commodity identifier of the target commodity, determine a commodity identifier of the target commodity therefrom, and send the commodity identifier of the target commodity to the identification system; and generate a commodity label based on the weight and the commodity identifier of the target commodity;
the weight sensor is configured to obtain and send the weight of the target commodity to the weighing system;
the visual sensor is configured to obtain and send the image of the target commodity to the weighing system;
the identification system includes an identification algorithm module, an incremental learning algorithm module and a data module, in which,
the identification algorithm module is configured to deal the image of the target commodity and acquire a feature vector of the image; calculate a similarity between the feature vector and feature vectors in a feature vector database to obtain at least one feature vector exceeding a similarity threshold; and determine and output a candidate commodity identifier corresponding to the at least one feature vector to the weighing system; and
the incremental learning algorithm module is configured to judge whether incremental learning is needed after receiving the commodity identifier determined by the target commodity, and if so, extract a feature vector after performing enhancement processing on the image, combine the extracted feature vector with a trademark identifier of the target commodity and store into the feature vector database of the data module.

Embodiments of the present disclosure provide an identification method for an artificial intelligence identification scale based on autonomous incremental learning, in which the method is applied to the artificial intelligence identification scale system based on autonomous incremental learning, to achieve the capable of autonomously performing online incremental learning on different forms of different commodities, new commodities and wrongly identified commodities, thereby outputting results with high confidence and achieving strong robustness and adaptability. The identification method includes:
dealing an image of a target commodity to obtain a feature vector of the image;
calculating a similarity between the feature vector and feature vectors in a feature vector database to obtain at least one feature vector exceeding a similarity threshold;
determining and outputting a candidate commodity identifier corresponding to the at least one feature vector to a weighing system, in which the weighing system is configured to receive a commodity identifier of the target commodity determined by a user from the at least one candidate commodity identifier;
judging whether incremental learning is needed after receiving the commodity identifier determined by the target commodity;
if so, extracting a feature vector after performing enhancing processing on the image; and
combining the extracted feature vector with a trademark identifier of the target commodity and storing into the feature vector database of the data module.

In the embodiments of the present disclosure, a weighing system is configured to receive a weight of a target commodity, and receive and send an image of the target commodity to an identification system; receive at least one candidate commodity identifier of the target commodity, determine a commodity identifier of the target commodity therefrom, and send the commodity identifier of the target commodity to the identification system; and generate a commodity label based on the weight and the commodity identifier of the target commodity; a weight sensor is configured to -obtain and send the weight of the target commodity to the weighing system; a visual sensor is configured to obtain and send the image of the target commodity to the weighing system; and the identification system includes an identification algorithm module configured to deal the image of the target commodity and acquire a feature vector of the image; calculate a similarity between the feature vector and feature vectors in a feature vector database to obtain at least one feature vector exceeding a similarity threshold; and determine and output a candidate commodity identifier corresponding to the at least one feature vector to the weighing system; and an incremental learning algorithm module configured to judge whether incremental learning is needed after receiving the commodity identifier determined by the target commodity, and if so, extract a feature vector after performing enhancement processing on the image, combine the extracted feature vector with a trademark identifier of the target commodity and store into the feature vector database of the data module. Compared with the prior art, the present disclosure can autonomously perform online incremental learning on different forms of different commodities, new commodities and wrongly identified commodities, and can output correct results with high confidence after one or several times of learning, thereby achieving strong robustness and adaptability.

### BRIEF DESCRIPTION OF THE DRAWINGS

In order to illustration the technical solutions in the embodiments of the present disclosure or in the prior art more clearly, a brief description of the drawings to be used in the description of the embodiments or the prior art will be given below. Obviously, the drawings used in the following description merely illustrate some embodiments of the present disclosure, and those of ordinary skill in the art may obtain other drawings from them without paying any creative effort. In the drawings:
FIG. 1 illustrates a schematic diagram of an artificial intelligence identification scale system based on autonomous incremental learning according to an embodiment of the present disclosure;
FIG. 2 illustrates a schematic diagram of a weighing system according to an embodiment of the present disclosure;
FIG. 3 illustrates a schematic diagram of an identification algorithm module according to an embodiment of the present disclosure;
FIG. 4 illustrates a flowchart of an identification method for an artificial intelligence identification scale based on autonomous incremental learning according to an embodiment of the present disclosure;
FIG. 5 illustrates a schematic diagram of a computer device according to an embodiment of the present disclosure.

### DETAILED DESCRIPTION

In order that the objectives, technical solutions and advantages of the embodiments of the present disclosure are clearer, the embodiments of the present disclosure will be further illustrated in detail below with reference to the drawings. Here, the exemplary embodiments of the present disclosure and the description thereof are used to illustrate the present disclosure, but are not intended to limit the present disclosure.

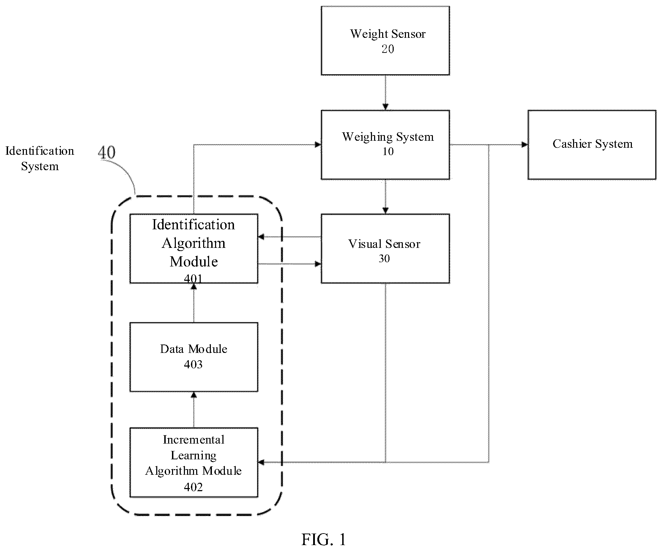

FIG. 1 illustrates a schematic diagram of an artificial intelligence identification scale system based on autonomous incremental learning according to an embodiment of the present disclosure, including a weighing system 10, a weight sensor 20, a visual sensor 30 and an identification system 40, in which,
the weighing system 10 is configured to receive a weight of a target commodity, and receive and send an image of the target commodity to the identification system; receive at least one candidate commodity identifier of the target commodity, determine a commodity identifier of the target commodity therefrom, and send the commodity identifier of the target commodity to the identification system; and generate a commodity label based on the weight and the commodity identifier of the target commodity;
the weight sensor 20 is configured to obtain and send the weight of the target commodity to the weighing system;
the visual sensor 30 is configured to obtain and send the image of the target commodity to the weighing system;
the identification system 40 includes an identification algorithm module 401, an incremental learning algorithm module 402 and a data module 403, in which,
the identification algorithm module 401 is configured to deal the image of the target commodity and acquire a feature vector of the image; calculate a similarity between the feature vector and feature vectors in a feature vector database to obtain at least one feature vector exceeding a similarity threshold; and determine and output a candidate commodity identifier corresponding to the at least one feature vector to the weighing system; and
the incremental learning algorithm module 402 is configured to judge whether incremental learning is needed after receiving the commodity identifier determined by the target commodity, and if so, extract a feature vector after performing enhancement processing on the image, combine the extracted feature vector with a trademark identifier of the target commodity and store into the feature vector database of the data module 403.

Compared with the prior art, the system proposed by the embodiment of the present disclosure can autonomously perform online incremental learning on different forms of different commodities, new commodities and wrongly identified commodities, and can output correct results with high confidence after one or several times of learning, thereby achieving strong robustness and adaptability.

The weighing system in the system proposed by the embodiment of the present disclosure may implement some automatic functions. Firstly, an image of a target commodity may be obtained, and then identified by an artificial intelligence algorithm. Next, a commodity identifier of the target commodity is determined based on a commodity identification result. After that, a corresponding price in the database may be obtained and multiplied with a weight of the target commodity, so as to obtain a settlement price and generate a commodity label. The above automatic identification and obtainment of the corresponding price data may improve the efficiency of commodity weighing and settlement, and reduce the labor cost consumed in the commodity settlement.

The identification system in the system proposed by the embodiment of the present disclosure can autonomously perform online incremental learning on different and unknown forms of commodities, new commodities and wrongly identified commodities, by the autonomously online incremental learning in cooperation with a feature vector database. The specific method is to perform an enhancement learning on the correct candidate results with low confidence, perform an inhibition learning on the wrong results with high confidence, and perform an online incremental learning on the new commodities. The system proposed by the embodiment of the present disclosure can autonomously and online enhance the robustness of the identification system, prevent the false identification of the same type of commodities with a high probability in the subsequent use process, reduce the manual intervention operation in the use process of the artificial intelligence identification scale, and avoid the frequent offline optimization for the identification model using the background training service platform.

In an embodiment, the commodity identifier includes a commodity name and a commodity code.

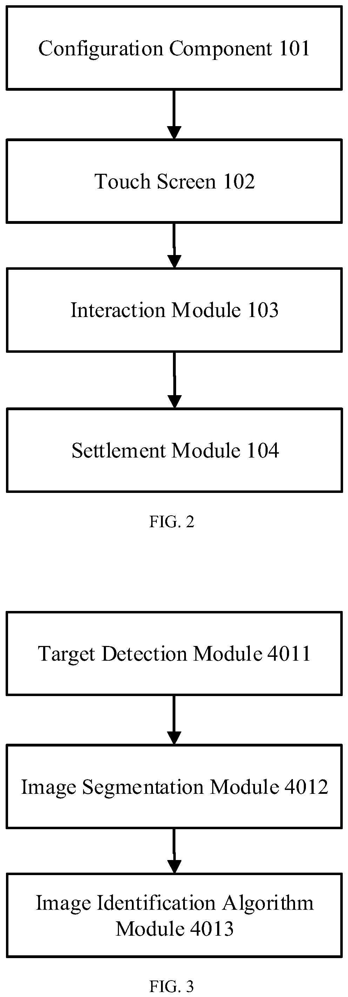

Specifically, the weighing system, such as an electronic scale platform, runs in a system of Windows, Linux or Android. FIG. 2 illustrates a schematic diagram of a weighing system according to an embodiment of the present disclosure. In an embodiment, the weighing system includes:
a configuration component 101 configured to configure the weight sensor, the visual sensor, the identification system and a cashier system which are connected;
a touch screen 102 configured to display the commodity identifier and the weight of the target commodity;
an interaction module 103 configured to receive the weight of the target commodity, and receive and send the image of the target commodity to the identification system; receive the at least one candidate commodity identifier of the target commodity; determine the commodity identifier of the target commodity therefrom and send the commodity identifier to the identification system; perform a search operation after receiving a search instruction input by a user; call the identification system to identify the target commodity after receiving a re-identification instruction from the user; and receive a commodity identifier confirmed by the user; in addition, a commodity label may be printed;
a settlement module 104 configured to generate the commodity label based on the weight and the commodity identifier of the target commodity; and settle the target commodity through the connected cashier system.

In the embodiment of the present disclosure, the weight sensor is a hardware device with a weighing instrument as a core, which can sense a weight and a weight change of an object, directly connect the weighing system and transmit weight information to the weighing system;
the visual sensor is a conventional camera hardware. In an embodiment, the visual sensor is further configured to obtain a video stream of the target commodity, and send the video stream to the identification system through the weighing system; the identification algorithm module of the identification system is further configured to extract the image of the target commodity from the video stream.

In an embodiment, the interaction module of the weighing system is further configured to:
receive a commodity identifier input by a user when the received candidate commodity identifier of the target commodity is null; and
take the commodity identifier input by the user as the determined commodity identifier.

In the embodiment of the present disclosure, the identification system may be installed on the weighing system based on a system of Windows, Linux or Android. The identification system is based on the technology of the visual image and the artificial intelligence, including the traditional digital image processing algorithm and the deep neural network model in the artificial intelligence technology, and can identify the target object.

FIG. 3 illustrates a schematic diagram of an identification algorithm module according to an embodiment of the present disclosure. In an embodiment, the identification algorithm module includes:
a target detection module 4011 configured to identify a commodity area in the image of the target commodity;
an image segmentation module 4012 configured to segment the commodity area from the image of the target commodity;
in practical use, the commodity area may be obtained by using one of target detection and image segmentation;
an image identification algorithm module 4013 configured to identify the commodity area to obtain the feature vector of the image; calculate the similarity between the feature vector and feature vectors in a feature vector database to obtain at least one feature vector (generally, several top ranked feature vectors is obtained) exceeding the similarity threshold; and determine and output the candidate commodity identifier corresponding to the at least one feature vector to the weighing system.

In this embodiment, the target detection module 4011 is implemented by a single-stage or two-stage detection algorithm; the image segmentation module 4012 is implemented by instance segmentation and semantic segmentation algorithms; and the image identification algorithm module 4013 includes an AI model weight, algorithm reasoning, a pre-processing procedure, a post-processing procedure, etc.

In the embodiment of the present disclosure, the data module is a conventional structured database, which stores the commodity code, the commodity name and the feature vector for retrieval of each commodity.

In an embodiment, the incremental learning algorithm module is specifically configured to:
determine that incremental learning is needed in the following cases:
among the candidate commodity identifier identified corresponding to the at least one feature vector, the commodity identifier determined by the target commodity ranks first, and a confidence of the target commodity is lower than a confidence threshold;
among the candidate commodity identifiers identified corresponding to the at least one feature vector, the commodity identifier determined by the target commodity does not rank first; and
the identified candidate commodity identifier is null.

In an embodiment, the incremental learning algorithm module is specifically configured to:
extract the feature vector after performing enhancement processing on the image using the following steps:
performing enhancement processing on the image of the target commodity, the enhancement processing including at least one selected from the group of rotation, flipping and color transformation;
calling the identification algorithm module to deal the image after the enhancement processing to obtain a feature vector;
removing an item with a differentiation less than a differentiation threshold from the feature vector to obtain the extracted feature vector.

In an embodiment, the incremental learning algorithm module is specifically configured to:
increase a first record of selected times of the commodity identifier determined by the target commodity by 1;
if the commodity identifier determined by the target commodity does not rank first, increase a second record by 1;
calculate a confidence of the target commodity based on the first record and the second record.

Specifically, the incremental learning algorithm module 402 combines the extracted feature vector with a trademark identifier of the target commodity and stores into the feature vector database of the data module 403, and the feature vector database after combining will be reloaded when a new identification procedure is carried out next time. For a candidate result output in the new identification procedure carried out next time, the confidence is autonomously processed based on the comprehensive judgment of the selected times and the wrong identification times of the candidate result: the confidence of the candidate with higher selected times and lower wrong identification times is enhanced, and the confidence of the candidate with lower selected times and higher wrong identification times is inhibited.

The embodiment of the present disclosure further proposes an identification method for an artificial intelligence identification scale based on autonomous incremental learning, which is applied to the aforementioned artificial intelligence identification scale system based on autonomous incremental learning, and its principle is similar to that of the artificial intelligence identification scale system based on autonomous incremental learning, which will not be repeated here.

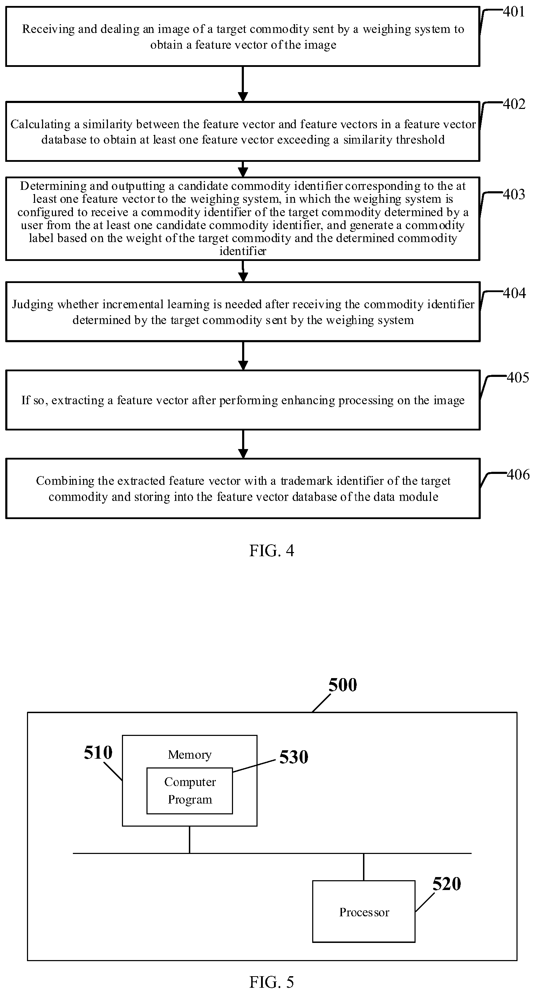

FIG. 4 illustrates a flowchart of an identification method for an artificial intelligence identification scale based on autonomous incremental learning according to an embodiment of the present disclosure, the identification method for an artificial intelligence identification scale based on autonomous incremental learning including:
step 401: receiving and dealing an image of a target commodity sent by a weighing system to obtain a feature vector of the image;
step 402: calculating a similarity between the feature vector and feature vectors in a feature vector database to obtain at least one feature vector exceeding a similarity threshold;
step 403: determining and outputting a candidate commodity identifier corresponding to the at least one feature vector to the weighing system, in which the weighing system is configured to receive a commodity identifier of the target commodity determined by a user from the at least one candidate commodity identifier, and generate a commodity label based on the weight of the target commodity and the determined commodity identifier;
step 404: judging whether incremental learning is needed after receiving the commodity identifier determined by the target commodity sent by the weighing system;
step 405: if so, extracting a feature vector after performing enhancing processing on the image;
step 406: combining the extracted feature vector with a trademark identifier of the target commodity and storing into a feature vector database of the data module.

In an embodiment, receiving and dealing an image of the target commodity sent by the weighing system to obtain the feature vector of the image includes:
identifying a commodity area in the image of the target commodity, or segmenting the commodity area from the image of the target commodity; and
identifying the commodity area to obtain the feature vector of the image.

In an embodiment, judging whether incremental learning is needed includes:
determining that incremental learning is needed in the following cases:
among the candidate commodity identifiers identified corresponding to the at least one feature vector, the commodity identifier determined by the target commodity ranks first, and a confidence of the target commodity is lower than a confidence threshold;
among the candidate commodity identifiers identified corresponding to the at least one feature vector, the commodity identifier determined by the target commodity does not rank first; and
the identified candidate commodity identifier is null.

In an embodiment, extracting the feature vector after performing enhancing processing on the image includes:
performing enhancement processing on the image of the target commodity, the enhancement processing including at least one selected from the group of rotation, flipping and color transformation;
calling an identification algorithm module to deal the image after the enhancement processing to obtain a feature vector; and
removing an item with a differentiation less than a differentiation threshold from the feature vector to obtain the extracted feature vector.

In an embodiment, the method further includes:
increasing a first record of selected times of the commodity identifier determined by the target commodity by 1;
if the commodity identifier determined by the target commodity does not rank first, increasing a second record by 1;
calculating a confidence of the target commodity based on the first record and the second record.

To sum up, the system and the identification method proposed by the embodiments of the present disclosure have the following advantageous effects:
Firstly, the system structure is clearer and more concise, and there is no any other complicated component. After the identification system is incorporated, it is possible to implement autonomous incremental learning, avoid a background model training service platform developed and docked separately, improve the efficiency and accuracy of the daily use of the intelligent weighing platform, and also improve the production and development efficiency of the intelligent scale.
Secondly, the visual image information and artificial intelligence algorithm can be effectively used to automatically identify the commodities, and then acquire corresponding price data, thereby improving the efficiency of commodity weighing and settlement, and reducing the labor cost consumed in the commodity settlement.
Thirdly, after the incremental learning by the incremental learning algorithm module, the system can reload the combined feature vector database in a new identification procedure carried out next time, so that the candidate results with more correct ranking and confidence is output when the target commodity is to be identified. By online incremental learning on different and unknown forms of commodities, new commodities and wrongly identified commodities, it is possible to enhance the robustness of the identification system, prevent the false identification of the same type of commodities, reduce the manual intervention operation in the use process of the AI identification scale, avoid the frequent offline optimization support for the identification model using a background training server, and reduce the commodity maintenance cost.

An embodiment of the present disclosure further provides a computer device. FIG. 5 illustrates a schematic diagram of a computer device according to an embodiment of the present disclosure. The computer device 500 includes a memory 510, a processor 520 and a computer program 530 stored in the memory 510 and runnable in the processor 520. When executing the computer program 530, the processor 520 implements the aforementioned identification method of the artificial intelligence identification scale based on autonomous incremental learning.

An embodiment of the present disclosure further provides a computer-readable storage medium that stores a computer program, and when executed by a processor, the computer program, implements the aforementioned identification method of the artificial intelligence identification scale based on autonomous incremental learning.

An embodiment of the present disclosure further provides a computer program product, including a computer program, when executed by a processor, the computer program implements the aforementioned identification method of the artificial intelligence identification scale based on autonomous incremental learning.

Those skilled in the art should appreciate that any embodiment of the present disclosure may be provided as a method, a system or a computer program product. Therefore, the present disclosure may take the form of a full hardware embodiment, a full software embodiment, or an embodiment combining software and hardware. Moreover, the present disclosure may take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be implemented by computer program instructions. Those computer program instructions may be provided to a general computer, a dedicated computer, an embedded processor or a processor of other programmable data processing device to produce a machine, so that the instructions executed by the processor of the computer or other programmable data processing device produce means for implementing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device that implements function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing implemented by the computer, thus the instructions executed on the computer or other programmable devices provide step(s) for realizing function(s) specified in one or more flows in the flowchart and/or one or more blocks in the block diagram.

The above specific embodiments further illustrate the objectives, technical solutions and advantageous effects of the present disclosure in detail. As should be understood, those described above are merely specific embodiments of the present disclosure, and are not intended to limit the protection scope of the present disclosure. Any modification, equivalent substitution, improvement, etc. made within the spirit and principle of the present disclosure should be included in the protection scope of the present disclosure.

## Claims

1. An artificial intelligence identification scale system based on autonomous incremental learning, comprising a weighing system, a weight sensor, a visual sensor and an identification system, wherein,
the weighing system is configured to receive a weight of a target commodity, and receive and send an image of the target commodity to the identification system; receive at least one candidate commodity identifier of the target commodity, determine a commodity identifier of the target commodity therefrom, and send the commodity identifier of the target commodity to the identification system; and generate a commodity label based on the weight and the commodity identifier of the target commodity;
the weight sensor is configured to obtain and send the weight of the target commodity to the weighing system;
the visual sensor is configured to obtain and send the image of the target commodity to the weighing system;
the identification system comprises an identification algorithm module, an incremental learning algorithm module and a data module, wherein,
the identification algorithm module is configured to deal the image of the target commodity and acquire a feature vector of the image; calculate a similarity between the feature vector and feature vectors in a feature vector database to obtain at least one feature vector exceeding a similarity threshold; and determine and output a candidate commodity identifier corresponding to the at least one feature vector to the weighing system; and
the incremental learning algorithm module is configured to judge whether incremental learning is needed after receiving the commodity identifier determined by the target commodity, and if so, extract a feature vector after performing enhancement processing on the image, combine the extracted feature vector with a trademark identifier of the target commodity and store into the feature vector database of the data module.

2. The system according to claim 1, wherein the weighing system comprises:
a configuration component configured to configure the weight sensor, the visual sensor, the identification system and a cashier system which are connected;
a touch screen configured to display the commodity identifier and the weight of the target commodity;
an interaction module configured to receive the weight of the target commodity, and receive and send the image of the target commodity to the identification system; receive the at least one candidate commodity identifier of the target commodity; determine the commodity identifier of the target commodity therefrom and send the commodity identifier to the identification system; perform a search operation after receiving a search instruction input by a user; call the identification system to identify the target commodity after receiving a re-identification instruction from the user; and receive a commodity identifier confirmed by the user; and
a settlement module configured to generate the commodity label based on the weight and the commodity identifier of the target commodity; and settle the target commodity through the connected cashier system.

3. The system according to claim 1, wherein the interaction module of the weighing system is further configured to:
receive a commodity identifier input by a user when the received candidate commodity identifier of the target commodity is null; and
take the commodity identifier input by the user as the determined commodity identifier.

4. The system according to claim 1, wherein the identification algorithm module comprises:
a target detection module configured to identify a commodity area in the image of the target commodity;
an image segmentation module configured to segment the commodity area from the image of the target commodity; and
an image identification algorithm module configured to identify the commodity area to obtain the feature vector of the image; calculate the similarity between the feature vector and the feature vectors in the feature vector database to obtain at least one feature vector exceeding the similarity threshold; and determine and output the candidate commodity identifier corresponding to the at least one feature vector to the weighing system.

5. The system according to claim 1, wherein the incremental learning algorithm module is specifically configured to:
determine that incremental learning is needed in the following cases:
among the candidate commodity identifier identified corresponding to the at least one feature vector, the commodity identifier determined by the target commodity ranks first, and a confidence of the target commodity is lower than a confidence threshold;
among the candidate commodity identifiers identified corresponding to the at least one feature vector, the commodity identifier determined by the target commodity does not rank first; and
the identified candidate commodity identifier is null.

6. The system according to claim 1, wherein the incremental learning algorithm module is specifically configured to:
extract the feature vector after performing enhancement processing on the image using the following steps:
performing enhancement processing on the image of the target commodity, the enhancement processing comprising at least one selected from the group of rotation, flipping and color transformation;
calling the identification algorithm module to deal the image after the enhancement processing to obtain a feature vector; and
removing an item with a differentiation less than a differentiation threshold from the feature vector to obtain the extracted feature vector.

7. The system according to claim 1, wherein the incremental learning algorithm module is specifically configured to:
increase a first record of selected times of the commodity identifier determined by the target commodity by 1;
if the commodity identifier determined by the target commodity does not rank first, increase a second record by 1; and
calculate a confidence of the target commodity based on the first record and the second record.

8. The system according to claim 1, wherein the visual sensor is further configured to obtain a video stream of the target commodity, and send the video stream to the identification system through the weighing system; and
the identification algorithm module of the identification system is further configured to extract the image of the target commodity from the video stream.

9. The system according to claim 1, wherein the commodity identifier comprises a commodity name and a commodity code.

10. An identification method for an artificial intelligence identification scale based on autonomous incremental learning, wherein the method is applied to the system according to any one of claims 1 to 9, comprising:
receiving and dealing an image of a target commodity sent by a weighing system to obtain a feature vector of the image;
calculating a similarity between the feature vector and feature vectors in a feature vector database to obtain at least one feature vector exceeding a similarity threshold;
determining and outputting a candidate commodity identifier corresponding to the at least one feature vector to the weighing system, wherein the weighing system is configured to receive a commodity identifier of the target commodity determined by a user from the at least one candidate commodity identifier, and generate a commodity label based on the weight of the target commodity and the determined commodity identifier;
judging whether incremental learning is needed after receiving the commodity identifier determined by the target commodity sent by the weighing system;
if so, extracting a feature vector after performing enhancing processing on the image; and
combining the extracted feature vector with a trademark identifier of the target commodity and storing into the feature vector database of the data module.

11. The method according to claim 10, wherein the receiving and dealing the image of the target commodity sent by the weighing system to obtain the feature vector of the image comprises:
identifying a commodity area in the image of the target commodity, or segmenting the commodity area from the image of the target commodity; and
identifying the commodity area to obtain the feature vector of the image.

12. The method according to claim 10, wherein judging whether incremental learning is needed comprises:
determine that incremental learning is needed in the following cases:
among the candidate commodity identifier identified corresponding to the at least one feature vector, the commodity identifier determined by the target commodity ranks first, and a confidence of the target commodity is lower than a confidence threshold;
among the candidate commodity identifiers identified corresponding to the at least one feature vector, the commodity identifier determined by the target commodity does not rank first; and
the identified candidate commodity identifier is null.

13. The method according to claim 10, wherein extracting the feature vector after performing enhancing processing on the image comprises:
performing enhancement processing on the image of the target commodity, the enhancement processing comprising at least one selected from the group of rotation, flipping and color transformation;
calling an identification algorithm module to deal the image after the enhancement processing to obtain a feature vector; and
removing an item with a differentiation less than a differentiation threshold from the feature vector to obtain the extracted feature vector.

14. The method according to claim 10, wherein further comprises:
increasing a first record of selected times of the commodity identifier determined by the target commodity by 1;
if the commodity identifier determined by the target commodity does not rank first, increasing a second record by 1; and
calculating a confidence of the target commodity based on the first record and the second record.

15. A computer device, comprising a memory, a processor and a computer program stored in the memory and runnable in the processor, wherein when executing the computer program, the processor implements the method according to any one of claims 10 to 14.

16. A computer-readable storage medium that stores a computer program, and when executed by a processor, the computer program implements the method according to any one of claims 10 to 14.

17. A computer program product, comprising a computer program, wherein when executed by a processor, the computer program implements the method according to any one of claims 10 to 14.
